Europäisches Patentamt

European Patent Office

Office européen des brevets

(11) Publication number: **0 335 275**
**A2**

# EUROPEAN PATENT APPLICATION

(21) Application number: **89105303.5**

(22) Date of filing: **23.03.89**

(51) Int. Cl.⁴: **G11B 7/24 , G11B 7/26**

(30) Priority: **31.03.88 JP 76572/88**

(43) Date of publication of application:
**04.10.89 Bulletin 89/40**

(84) Designated Contracting States:
**DE FR GB NL**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Ohkawa, Hideki c/o Patent Division,**
**K. K. Toshiba**
**1-1 Shibaura 1-chome**
**Minato-ku Tokyo 105(JP)**

(74) Representative: **Henkel, Feiler, Hänzel &**
**Partner**
**Möhlstrasse 37**
**D-8000 München 80(DE)**

(54) Information storage medium.

(57) An information storage medium in which information is read based on an intensity of light reflected from a recording film when reproducing light is applied to the recording film is disclosed, comprising a substrate (11) and a recording film (12) formed on the substrate (11), comprising tellurium, carbon, and hydrogen, wherein the content in at.% of the carbon and the hydrogen satisfies the equation: 25 at.% $\leq$ C + H $\leq$ 38 at.%. The recording sensitivity, oxidation resistance, and reproducing laser power margin of the medium can be easily judged.

F I G. 1

## Information storage medium

The present invention relates to an information storage medium whose recording sensitivity, oxidation resistance, and reproducing laser power margin can be easily judged.

It is known that when sputtering of a Te target is performed in a hydrocarbon gas or a gas mixture prepared by diluting a hydrocarbon gas with a rare gas, an information recording film called a "Te-C film" is obtained (U.S.P. No. 4,433,340). This Te-C film is not a chemical compound that has a stoichiometrically predetermined composition. Therefore, the contents of carbon, hydrogen, and tellurium in the film can be arbitrarily changed by changing the manufacturing conditions. In this case, the optical recording sensitivity and oxidation resistance of the film are changed with the manufacturing conditions. According to conventional techniques, oxidation resistance of an information recording film containing carbon, hydrogen, and tellurium at each composition ratio must be checked by exposing each film to acceleration conditions of high temperature and humidity for a long period of time.

Reproduction of recording information is performed by radiating a continuously-oscillated laser beam onto a recording film and reading the difference in intensity of reflected light corresponding to the presence/absence of a pit formed in the recording film by, e.g., a heat mode scheme. In this case, the power of reproducing laser beam is weak. However, if radiation of a laser beam is continued for a long period of time, more heat generated by the radiation of laser beam is absorbed in the recording film, and surface deformation occurs. As a result, the reflectance of the film is decreased (degradation of reproduction characteristics), and the S/N ratio is decreased. In order to prevent degradation of reproduction characteristics, the power of a reproducing laser beam may be decreased. However, a relationship between the laser power level within which a recording medium is free from damage and composition ratio has not been established.

For this reason, the oxidation resistance or allowable laser power margin of a recording film cannot be determined by a simple method within a short period of time, and hence a problem is posed in practice.

It is therefore an object of the present invention to provide an information storage medium having good recording sensitivity, oxidation resistance, and reproducing laser power margin.

These and other objects according to the invention are achieved by an information storage medium in which information is read based on an intensity of light reflected from a recording film when reproducing light is applied to the recording film, said medium comprising:
a substrate; and
a recording film, formed on said substrate, comprising tellurium, carbon, and hydrogen,
wherein the combined content in at.% of carbon and hydrogen satisfies the equation: 25 at.% $\leq$ C + H $\leq$ 38 at.%.

In addition, according to the present invention, there is provided an information storage medium in which information is read based on an intensity of light reflected from a recording film when reproducing light is applied to the recording film, said medium comprising:
substrate; and
a recording film, formed on said substrate, comprising tellurium, carbon, and hydrogen,
wherein the composition ratio in at.% of the carbon and the hydrogen satisfies the following equation: 1.00 $\leq$ H/C $\leq$ 1.35.

This invention can be more fully understood from the following detailed description when taken in conjunction with the accompanying drawings, in which:

Fig. 1 is a sectional view of an information storage medium according to the present invention;

Fig. 2 is a schematic view showing an apparatus for forming an optical recording film according to the present invention;

Fig. 3 is a graph showing optical recording sensitivities of recording films manufactured with various Q values;

Fig. 4 is a graph showing the modulation amplitude of reproducing reflected light;

Fig. 5 is a graph showing changes in reflectance as function of time;

Fig. 6 is a graph showing the allowable maximum reproducing laser power values of the recording films manufactured with the various Q values; and

Fig. 7 is a graph showing at.% of C + H and H/C values of the recording films manufactured with the various Q values.

Preferred embodiments of the present invention are described with reference to the drawings. In an information storage medium of the present invention, stored data is read based on an intensity of light reflected from a recording film when reproducing light is applied to the recording film.

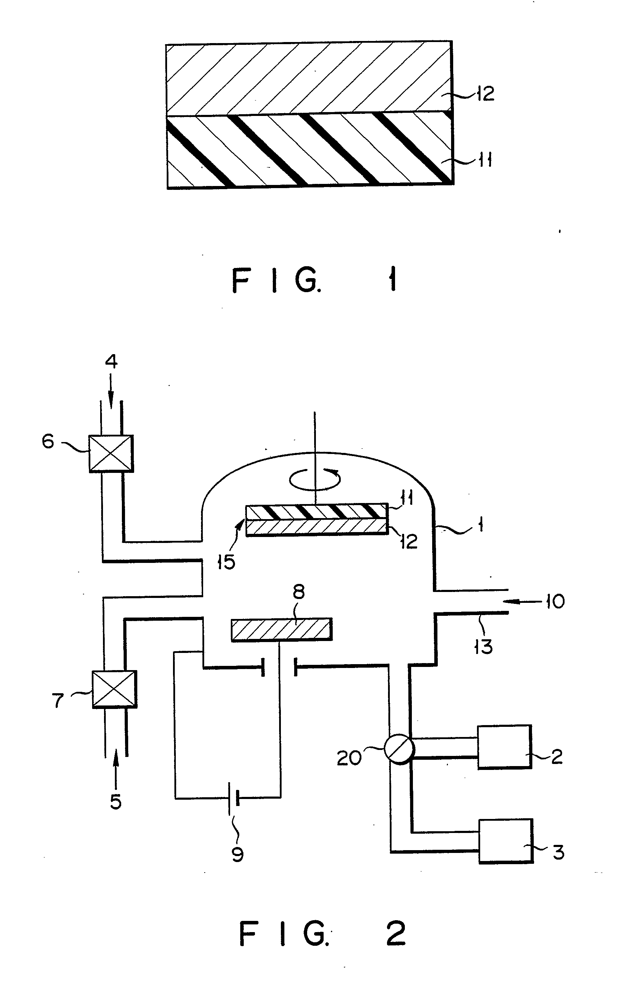

Fig. 1 is a schematic sectional view showing an arrangement of an information storage medium according to the present invention. The information storage medium of the present invention comprises substrate 11 and recording film 12 formed on substrate 11.

Substrate 11 is made of a material transparent to the laser beam that is radiated onto the information storage medium so as to record and reproduce information. When a laser beam having a wavelength, for example, near the range of near-infrared rays is used, polycarbonate (PC), polymethyl methacrylate (PMMA), glass, polyolefin, epoxy resin, and the like are used. Alternatively, when a write or reproducing laser beam is incident from the recording film side without passing through the substrate, the substrate may be opaque.

Recording film 12 contains Te, C, and H, and has a structure in which Te clusters are dispersed in a C-H matrix in which carbon and hydrogen are bonded to each other by chemical bonds. This film is an amorphous film in which no diffraction peak is recognized from any specific diffraction angle by an X-ray diffraction analysis. Information is recorded by forming pits in the recording film. The recording film preferably has a thickness of about 100 to 1000 Å. If the film thickness exceeds about 1000 Å, write sensitivity is degraded since much energy is required to form pits. If it is thinner than about 100 Å, the recording film becomes discontinuous, and the probability of formation of pin holes is increased. These pin holes may be erroneously detected as pits in a read operation. In addition, the pin holes become starting points for oxidation of the recording film, and hence must be decreased as much as possible.

The information storage medium of the present invention can be obtained by, e.g., sputtering a Te target placed in a vacuum chamber by discharge of a gas mixture of a hydrocarbon gas and a rare gas, and depositing Te and C-H polymer on a substrate placed in the vaccum chamber.

In the present invention, a relationship between composition ratio of the recording film and oxidation resistance, recording sensitivity, and allowable laser power margin is established by using the following parameter Q. More specifically, when the flow rates of the hydrocarbon and rare gases in formation of the recording film of the present invention are respectively represented by X and Y, $Q = \{X/(X + Y)\} = 100\%$.

It was found that high recording sensitivity and oxidation resistance and a wide reproducing laser power margin could be obtained when the Q value is selected to be within the range of about 40 to 80%. It was also found that whether a given recording film was manufactured with this Q value or not can be determined by checking whether composition ratios in at.% of carbon (C) and hydrogen (H) satisfy the following equations: $25$ at.% $\leq C + H \leq 38$ at.% or $1.00 \leq H/C \leq 1.35$. Carbon and hydrogen can be easily measured by an elemental analysis or the like within a short period of time.

Oxidation resistance, previously judged by a lengthy acceleration test in the conventional technique, can be quickly judged. At the same time, optical recording sensitivity and laser power margin can be quickly determined.

Example

A method of manufacturing the information storage medium shown in Fig. 1 will be described below.

Fig. 2 is a schematic view showing a sputtering apparatus for preparing the recording film according to the present invention. Chamber 1 is evacuated to 0.2 Torr by setting valve 20 to the rotary oil pump 2 side. Subsequently, valve 20 is set to the cryopump 3 side so as to further evacuate chamber 1 to $5 \times 10^{-6}$ Torr or less. $CH_4$ gas 4 and Ar gas 5 are fed into chamber 1 at 5 SCCM, respectively, through mass flow controllers 6 and 7. In this case, the value of Q is 50%. The flow rate of $CH_4$ gas 4 is preferably set to be 10 SCCM or less. If the flow rate exceeds this value, pressure control in the vacuum chamber becomes difficult, and carbon may be deposited on the Te target surface 8 during film formation.

Valve 20 is adjusted so as to set the pressure in chamber 1 at $5 \times 10^{-3}$ Torr by using an ion gauge (not shown).

A DC power of 70 W is applied from power supply 9 to Te target 8 to produce a glow-discharge. While polycarbonate (PC) substrate 11 is rotated by a rotary unit (not shown) at 60 rpm, an optical recording film 12 containing C, H, and Te is formed on a surface of substrate 11.

Sputtering is preferably performed by employing a so-called magnetron sputtering mode in which a magnet is arranged under a backing plate of a target. By use of a magnetic field, ionized species like ions and electrons are confined near the target surface. This prevents a rise in temperature caused by the electrons in the plasma applied to the substrate. This sputtering procedure is especially effective when a substrate material having a low thermal resistance, such as PC and PMMA, is used. In addition, if the plasma above the target is confined by the magnetic field, any plasma polymer deposited on the target is sputtered away. As a result, sputtering of the Te target is facilitated, and the film formation rate is stabilized.

After a 300-Å thick recording film 12 is deposited, feeding of $CH_4$ gas 4 and Ar gas 5 is stopped. After chamber 1 is evacuated to $5 \times 10^{-6}$ Torr or less, $N_2$ gas 10 is fed into chamber 1 through $N_2$ gas line 13 so as to restore chamber 1 to the atmospheric pressure. Recording medium 15 is then removed from chamber 1.

Recording films are manufactured following the same procedures as described above with the Q values of 0, 20, 40, 80 and 100% by controlling flow rates of CH₄ gas and Ar gas to be various values.

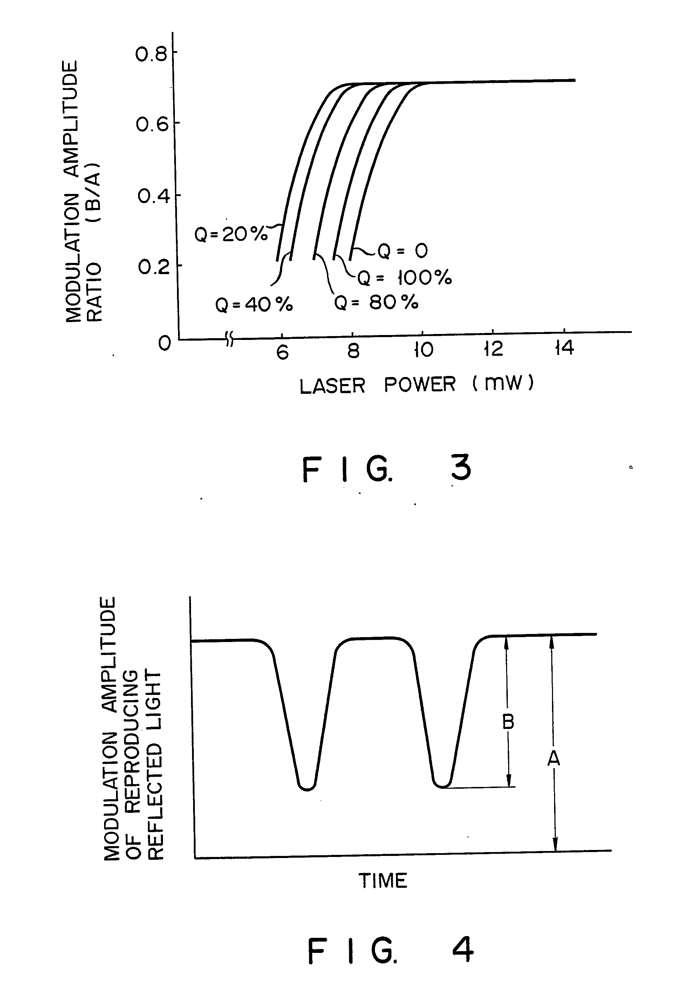

Fig. 3 shows optical recording sensitivity of the recording films formed with the above-mentioned Q values. Referring to Fig. 3, the ordinate axis represents the modulation amplitude ratio (B/A) of reproducing reflected light shown in Fig. 4. The abscissa represents laser power (a semiconductor laser having a wavelength of 830 nm being used) during a write operation. A pulse width is set to 80 nsec.

As shown in Fig. 3, a recording film formed with Q = 20% exhibits the highest write sensitivity. The sensitivity is gradually decreased with Q = 40% and 80%. When Q = 100%, i.e., when sputtering is performed by only using CH₄ gas, the sensitivity is further decreased. When Q = 0, e.g., when a film consisting of only Te is formed, the sensitivity is low.

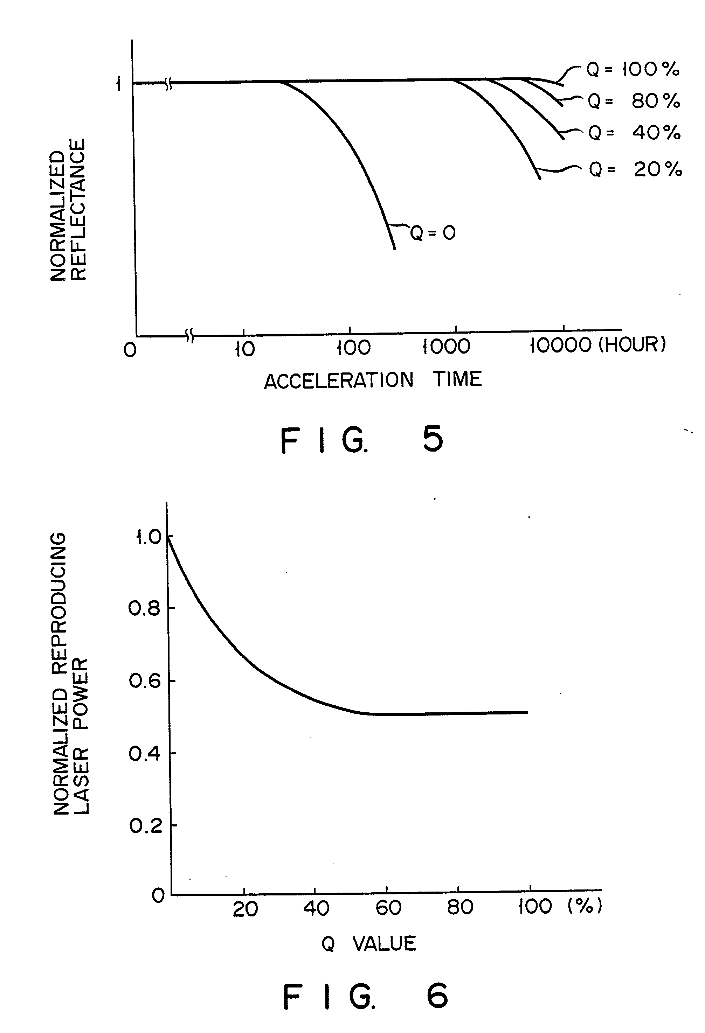

Fig. 5 shows changes in reflectance of recording films formed with the abovementioned Q values in acceleration conditions (60°C - 90%RH). The reflectances are normalized assuming that a reflectance immediately after preparation of film is 1. A decrease in reflectance is used as a parameter of oxidation resistance of a recording film. According to Fig. 5, a Te film when Q = 0 has the worst oxidation resistance. As the Q value is increased to 20, 40, and 80%, the reflectance is improved. When Q = 100%, the reflectance showed essentially no decrease even after 5,000 hours.

Fig. 6 shows allowable maximum reproducing laser power values of recording films formed with the respective Q values. The reproducing laser power values are normalized assuming that a value when Q = 0 is 1. As shown in Fig. 6, when Q = 50% or more, the values are substantially constant. In contrast, when Q is 0 to 50%, high reproducing power can be used. That is, the margin of reproducing laser power can be increased, and hence power adjustment of a reproducing laser beam is facilitated.

From the viewpoint of the overall characteristics shown in Figs. 3, 5, and 6, an optical recording film formed when Q = 40 to 80% is superior to other films in sensitivity, oxidation resistance, and laser power margin.

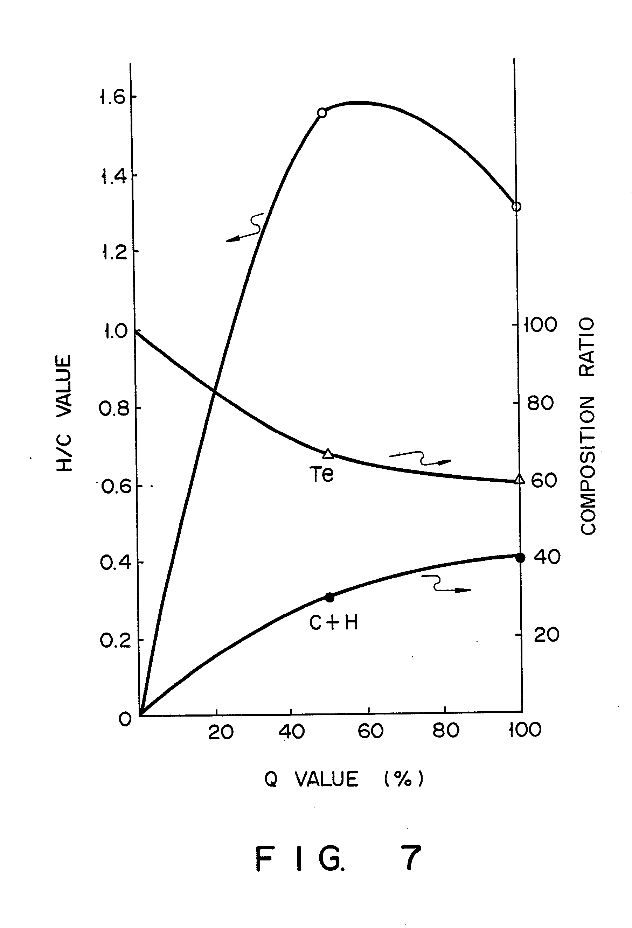

Fig. 7 shows composition analysis values of films formed with the respective Q values. A composition corresponding to Q = 40 to 80% satisfies 25 at.% ≤ C + H ≤ 38 at.%. In this Example, Te was subjected to atomic absorption spectrum analysis, and C and H were subjected to elemental analysis. These analyses took about half a day.

It is apparent that an H/C value corresponding to Q = 40 to 80% satisfies 1.00 ≤ H/C ≤ 1.35.

If composition analysis of a given film is performed and the above composition is obtained, it is easily determined that the film has three excellent characteristics, i.e., write sensitivity, oxidation resistance, and laser power margin.

In the above-described Example, CH₄ gas was used as a source gas for carbon and hydrogen in the recording films. However, other hydrocarbon gases such as $C_2H_6$, $C_3H_8$, $C_2H_4$, and $C_2H_2$ gases may be used.

## Claims

1. An information storage medium comprising:
a substrate (11); and
a recording film (12), supported on said substrate (11), comprising tellurium, carbon, and hydrogen, wherein the content in at.% of carbon and hydrogen satisfies the following equation: 25 at.% ≤ C + H ≤ 38 at.%.

2. The information storage medium according to claim 1, characterized in that the amount in at.% of tellurium is 62 at.% ≤ Te ≤ 75 at.%.

3. The information storage medium according to claim 1, characterized in that said recording film (12) is formed by depositing tellurium (8) by sputtering in an atmosphere of a hydrocarbon gas (4) and a rare gas (5).

4. An information storage medium comprising:
a substrate (11); and
a recording film (12), formed on said substrate (11), comprising tellurium, carbon, and hydrogen, wherein the content in at.% of carbon and hydrogen satisfies the following equation: 1.00 ≤ H/C ≤ 1.35.

5. The information storage medium according to claim 4, characterized in that said recording film (12) is formed by depositing tellurium (8) by sputtering in an atmosphere of a hydrocarbon gas (4) and a rare gas (5).

EP 0 335 275 A2

F I G. 1

F I G. 2

F I G. 3

F I G. 4

F I G.  5

F I G.  6

F I G.  7